Europäisches Patentamt

(19) European Patent Office

Office européen des brevets

(11) Publication number: **0 236 622**
**B1**

(12) **EUROPEAN PATENT SPECIFICATION**

(45) Date of publication of the patent specification:
09.05.90

(21) Application number: **86308941.3**

(22) Date of filing: **17.11.86**

(51) Int. Cl.⁵: **B60R 16/04**

(54) **Battery mounting device.**

(30) Priority: **03.03.86 US 835482**

(43) Date of publication of application:
**16.09.87 Bulletin 87/38**

(45) Publication of the grant of the patent:
**09.05.90 Bulletin 90/19**

(84) Designated Contracting States:
**DE FR GB**

(56) References cited:
**DE-A- 2 150 457**
**US-A- 2 009 199**
**US-A- 3 333 810**

(73) Proprietor: **Clark Equipment Company, 100 North Michigan Street P.O. Box 7008, South Bend Indiana 46634(US)**

(72) Inventor: **Tamas, Attila J., 2221 Tattersall, Portage Michigan 49002(US)**

(74) Representative: **Sheader, Brian N. et al, ERIC POTTER & CLARKSON 27 South Street, Reading Berkshire, RG1 4QU(GB)**

ACTORUM AG

## Description

The invention relates to battery mounting devices for vehicles.

A variety of types of battery mounting and hold-down devices have been previously developed. Exemplary such devices are disclosed in U.S. Patents US-A 2 947 373, Wilson, and US-A 3 165 163, Holka.

US-A 3 333 810 discloses a battery mounting device for vehicles comprising a support tray or shelf having an upturned flange around three sides thereof and open at the front for supporting a battery case and a U-shaped member pivotally connected at its ends to opposed said flanges adjacent the front of the tray or shelf, the U-shaped member, when engaged with a battery case on said shelf or tray, extending upwardly adjacent opposed sides of the battery case and being sprung into engagement with the top and front face of the battery case to retain the battery case on the tray or shelf. This disclosure suffers from the disadvantages that the U-shaped member is sprung into its engaging position and can therefore shake loose and the U-shaped member engages to the top of the battery case and may interfere with ready access to the battery terminals and vent caps.

The object of the present invention is to simplify and otherwise improve upon prior battery mounting devices, particularly for mounting in vehicles.

The present invention provides a battery mounting device for vehicles comprising, in combination, a battery case having at least one transversely extending projection at each of two opposed sides thereof, said projections being near the bottom of said battery case, a support tray supporting said battery case and adapted to be secured to a rigid member, said support tray including upwardly extending flanges at the other opposed sides of the battery case and adapted to support said other opposed sides, and a U-shaped member surrounding said battery case on three sides thereof and engaging one of said battery tray flanges at the open side of said U-shaped member, said battery case projections being engaged by the legs of said U-shaped member, and means adapted to connect the base of said U-shaped member to the adjacent flange of said support tray and being adjustable to rigidly engage said U-shaped member with said battery case and said support tray.

The present invention provides a low cost battery support structure which applies hold-down pressure near the bottom of the battery case by means of a minimum number of parts providing for easy access to the battery terminals and vent caps, for rapid installation and removal of the battery, and for improved reliability in a rigid battery mounting while involving less maintenance of the mounting device than heretofore.

The invention will be more particularly descibed with reference to the accompanying drawings, in which:-

Figure 1 is a perspective view showing a battery being held in place on a side frame member of a lift truck by a device according to an embodiment of the present invention;

Figure 2 is a perspective view of the device of Fig. 1 showing in broken lines a battery held in place thereon;

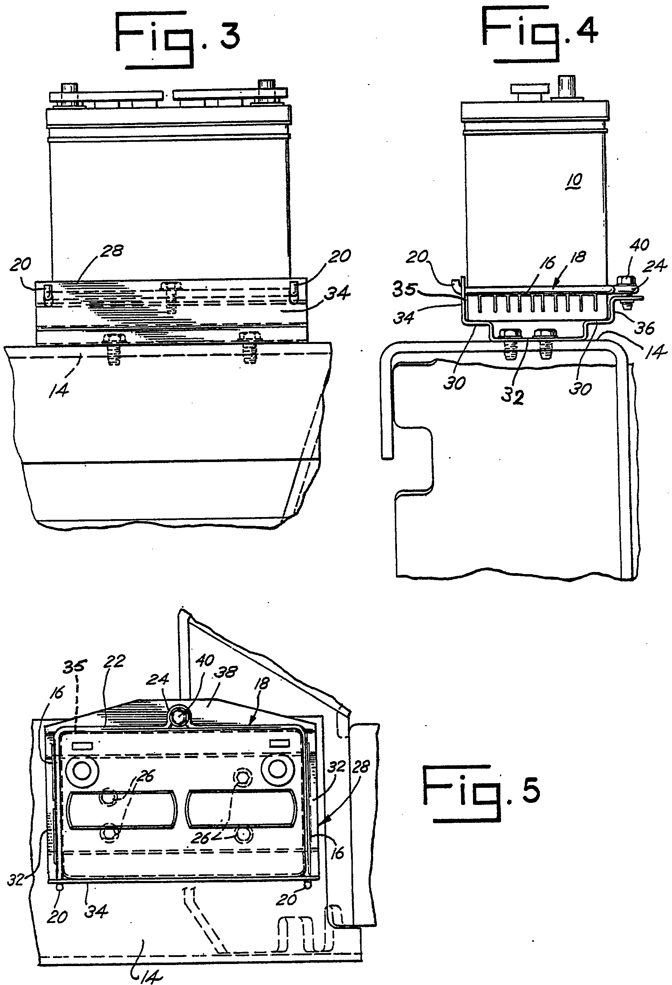

Figure 3 is a side elevational view of the device of Fig. 1 showing a battery held in place thereon;

Figure 4 is a front elevational view of Fig. 3; and

Figure 5 is a plan view of Fig. 3.

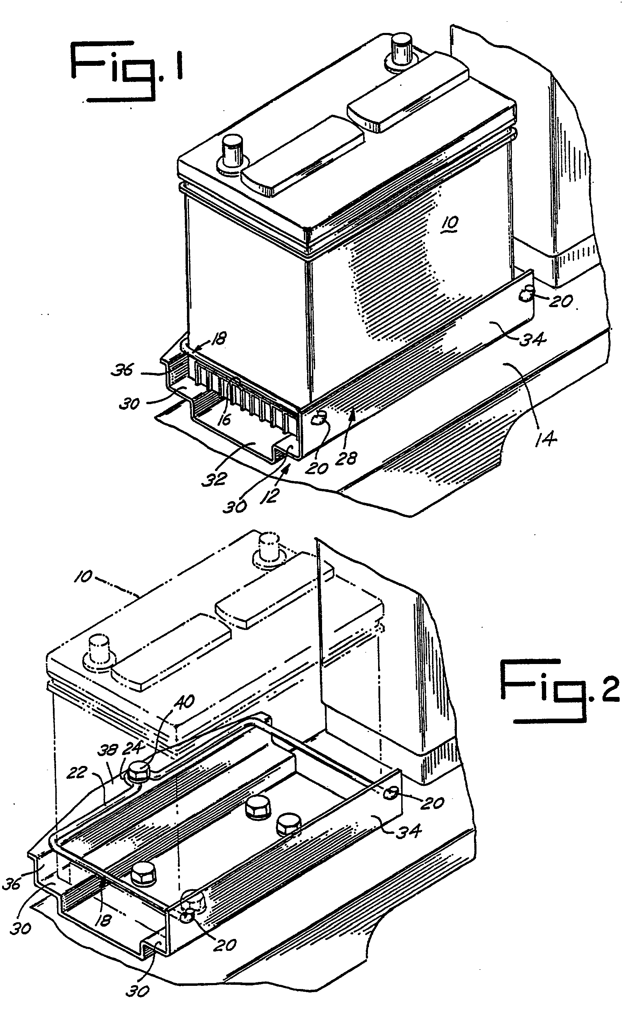

Referring first to Fig. 1, a battery having a case 10 is shown mounted in a device 12 on a side frame member 14 of an industrial lift truck, the latter being for exemplary purposes only.

Referring now also to ther remaining figures, the battery case 10, as is usual, includes transversely extending projections or ledges 16 adjacent the bottom thereof at least at the front and rear ends which are adapted to be engaged by the legs of a generally U-shaped round bar member 18 having upturned ends 20 and a base member 22 connecting the legs of U-shaped member 18 and having an outwardly loop extending portion 24 formed centrally of base 22.

A support tray which is connected to the frame of the vehicle by two pair of side-by-side longitudinally spaced studs 26 comprises a tray 28 formed as shown in Fig. 4 to provide a horizontal step 30 on each opposite side thereof for receiving the bottom of battery case 10 in spaced relation to frame 14. A bottom plate portion 32 is spaced below and connects steps 30. The tray 28 comprises an outer upwardly projecting flange 34 and an inner upwardly projecting flange 36, configured as best shown in Fig. 4. Flanges 34, 36 of the tray 28 are preferably spaced a small distance 35 from the adjacent sides of the battery case 10 and adapted to securely hold said sides of the battery case 10 in position in the tray 28 even when the U-shaped member 18 has a loose connection with the ledges 16 of battery case 10. Flange 36 of the tray 28 terminates in an outwardly extending shelf 38 configured as best shown in Fig. 5. Shelf 38 has a tapped opening therethrough adapted to be mounted in concentric relation to the opening formed by loop 24 of the U-shaped member 18 for receiving a threaded stud 40, which may be a self-threading head cap screw, which together with the structure described above is adapted to tie down the battery case 10 in rigid relationship in all directions to the support tray 28.

With the support tray 28 bolted in position on the truck frame by studs 26 battery case 10 is placed on steps 30 following which U-shaped member 18 is mounted on ledges 16 of the battery case 10 by inserting upturned ends 20 through corresponding openings in flange 34 of the tray with the base end 22 of the U-shaped member 18 somewhat elevated to enable such insertion; then, lowering the U-shaped member 18 to the position best shown in Fig. 4. allows the upturned ends 20 to positively engage tray flange 34. Threaded member 40 is then inserted through loop 24 and into the concentric opening in shelf 38. Tightening down on member 40 actuates downwardly the base 22 of the U-shaped member 18 thereby rigidly engaging battery case ledges 16, the resulting downward holding force being assisted by reaction steps 30. Thus the battery case 10 is maintained in operation in a fully supported and rigid relationship to the truck frame and tray member.

Thus, the invention provides a very compact and relatively simple battery mounting device having fewer parts than heretofore with less maintenance and complete reliability in holding rigidly in place the battery while providing for rapid battery installation and removal and ready access to the battery terminals and vent caps.

## Claims

1. A battery mounting device for vehicles comprising, in combination, a battery case (10), a support tray (28) supporting said battery case (10) and adapted to be secured to a rigid member (14), said support tray (28) including upwardly extending flanges (34, 36), and a U-shaped member (18) surrounding said battery case (10) on three sides thereof, characterised in that the battery case (10) has at least one transversely extending projection (16) at each of two opposed sides thereof, said projections (16) being near the bottom of the battery case (10), said upwardly extending flanges (34, 36) are at the other opposed sides of the battery case (10) and are adapted to support said other opposed sides, said U-shaped member engages one of said battery tray flanges (34) at the open side of said U-shaped member (18), said battery case projections (16) are engaged by the legs of said U-shaped member (18), and means (40) is provided adapted to connect the base (22) of said U-shaped member (18) to the adjacent flange (36) of said support tray (28) and being adjustable to rigidly engage said U-shaped member (18) with said battery case (10) and said support tray (28).

2. A battery mounting device according to claim 1, wherein the outer ends (20) of the legs of said U-shaped member (18) are turned so as to effect positive engagement with corresponding openings in the adjacent flange (34) of said support tray (28).

3. A battery mounting device according to claim 1 or 2, wherein the base (22) of said U-shaped member (18) includes an outwardly extending loop (24) through which is adapted to extend the adjustable means (40) for engaging a registrable opening in a shelf (38) of flange (36) of said support tray (28) such that said adjustable means (40) is actuatable to effect said rigid engagement between the legs of said U-shaped member (18) and said battery case projections (16).

4. A battery mounting device according to claim 3, wherein said adjustable means (40) is actuated at the base side only of said U-shaped member (18) so as to effect an inclination of said U-shaped member (18) toward the base (22) thereof.

5. A battery mounting device according to any one of the preceding claims, herein said adjustable means (40) engages the base (22) of said U-shaped member (18) and an outwardly extending shelf (38) of the adjacent flange (36) of said support tray (28) whereby to effect rigid holding engagement between the legs of said U-shaped member (18) and said battery case projections (16).

6. A battery mounting device according to any one of the preceding claims, wherein said adjustable means is a self-threading head cap screw member (40).

7. A battery mounting device according to claim 3, wherein said loop (24) is centrally located on the base (22) of the U-shaped member (18).

8. A battery mounting device according to any one of the preceding claims, wherein said support tray (28) includes horizontal step means (30) on which is adapted to rest the bottom of the battery case (10), said step means (30) being the reaction member when the U-shaped member (18) effects said rigid engagement.

9. A battery mounting device according to claim 8, wherein said U-shaped member (18) together with said step means (30) and battery case projections (16) comprise the sole structure which maintains the battery case (10) in rigid engagement with said support tray (28).

10. A battery mounting device according to any one of the preceding claims, wherein said U-shaped member (18) and said upwardly extending flanges (34, 36) maintain the battery case (10) in position in the support tray (28) when the U-shaped member (18) is not in said rigid engagement, said flanges (34, 36) being in closely spaced relation (35) to said other opposed sides of the battery case (10).

## Patentansprüche

1. Batteriehalterung für Fahrzeuge, mit einem Batteriegehäuse (10), mit einem an einem festen Bauteil (14) befestigbaren und nach oben weisende Flansche (34, 36) aufweisenden Tragtablett (28) für das Batteriegehäuse (10) und mit einem U-förmigen Glied (18), welches das Batteriegehäuse (10) auf drei Seiten umgibt, dadurch gekennzeichnet, daß das Batteriegehäuse (10) auf zwei einander gegenüberliegenden Seiten mindestens je einen sich in Querrichtung erstreckenden Vorsprung (16) nahe dem Boden des Batteriegehäuses (10) aufweist, daß die nach oben weisenden Flanschen (34, 36) die anderen einander gegenüberliegenden Seiten abstützen, daß das U-förmige Glied (18) mit seiner offenen Seite an einem (34) der Flanschen des Batterietabletts angreift, daß an den Vorsprüngen (16) des Batteriegehäuses die Schenkel des U-förmigen Gliedes (18) angreifen und daß Mittel (40) vorgesehen sind, mittels deren der Steg (22) des U-förmigen Gliedes (18) mit dem benachbarten Flansch (36) des Tragtabletts (28) verbindbar ist und die einstellbar sind, um das U-förmige Glied (18) fest an dem Batteriegehäuse (10) und dem Tragtablett (28) zum Angriff kommen zu lassen.

2. Batteriehalterung nach Anspruch 1, bei welcher die äußeren Enden (20) der Schenkel des U-förmigen Gliedes (18) abgewinkelt sind, um einen positiven Angriff an entsprechenden Öffnungen in dem benachbarten Flansch (34) des Tragtabletts (28) zu bewirken.

3. Batteriehalterung nach Anspruch 1 oder 2, bei welcher der Steg (22) des U-förmigen Gliedes (18) eine nach außen ausladende Schleife (24) umfaßt, durch welche sich die einstellbaren Mittel (40) hindurcherstrecken, um in eine fluchtende Öffnung in einem Absatz (38) des Flansches (36) des Tragtabletts (28) in der Weise einzugreifen, daß die verstellbaren Mittel betätigbar sind, um den festen Eingriff der Schenkel des U-förmigen Gliedes (18) und der Vorsprünge (16) des Batteriegehäuses herzustellen.

4. Batteriehalterung nach Anspruch 3, bei welcher die verstellbaren Mittel (40) nur an dem Steg des U-förmigen Gliedes (18) betätigbar sind, um eine Neigung des U-förmigen Gliedes (18) gegen den Steg (22) hin zu erzielen.

5. Batteriehalterung nach einem der vorangehenden Ansprüche, bei welcher die verstellbaren Mittel (40) an dem Steg (22) des U-förmigen Gliedes (18) und an einem nach außen sich erstreckenden Absatz (38) des benachbarten Flansches (36) des Tragtabletts (28) angreifen, um den festen Halteangriff zwischen den Schenkeln des U-förmigen Gliedes (18) und den Vorsprüngen (16) des Batteriegehäuses herzustellen.

6. Batteriehalterung nach einem der vorangehenden Ansprüche, dadurch gekennzeichnet, daß die einstellbaren Mittel eine selbstschneidende Kopfschraube (40) sind.

7. Batteriehalterung nach Anspruch 3, bei welcher die Schleife (24) in der Mitte des Steges (22) des U-förmigen Gliedes (18) angeordnet ist.

8. Batteriehalterung nach einem der vorangehenden Ansprüche, bei welcher das Tragtablett (28) horizontale Absätze (30) aufweist, auf welchen der Boden des Batteriegehäuses (10) aufruhen kann und die das Reaktionsglied bei dem festen Angriff des U-förmigen Gliedes (18) bilden.

9. Batteriehalterung nach Anspruch 8, bei welcher das U-förmige Glied (18) zusammen mit dem Absatz (30) und den Vorsprüngen (16) am Batteriegehäuse die einzigen Bauteile sind, die das Batteriegehäuse (10) in fester Verbindung mit dem Tragtablett (28) halten.

10. Batteriehalterung nach einem der vorangehenden Ansprüche, bei welcher das U-förmige Glied (18) und die sich nach oben erstreckenden Flanschen (34, 36) das Batteriegehäuse auf dem Tragtablett (28) bei nicht in festem Angriff befindlichem U-förmigen Glied (18) in Position halten, und die Flanschen (34, 36) sich in enger Nachbarschaft (35) zu den einander gegenüberliegenden Seiten des Batteriegehäuses (10) befinden.

## Revendications

1. Dispositif de montage d'une batterie pour véhicules, comprenant, en combinaison, un bac (10) de batterie, un plateau (28) de support supportant ledit bac (10) de batterie et conçu pour être fixé à un élément rigide (14), ledit plateau (28) de support comportant des rebords (34, 36) s'étendant vers le haut, et un élément (18) de forme en U entourant ledit bac (10) de batterie sur trois de ses côtés, caractérisé en ce que le bac (10) de batterie comporte au moins un saillie (16) s'étendant transversalement sur chacun de deux côtés opposés de celui-ci, lesdites saillies (16) étant proches du fond du bac (10) de la batterie, lesdits rebords (34, 36) s'étendant vers le haut sont situés sur les autres côtés opposés du bac (10) de la batterie et sont conçus pour supporter lesdits autres côtés opposés, lesdits éléments de forme en U s'enclenchent avec l'un desdits rebords (34) du plateau de la batterie sur le côté ouvert dudit élément (18) de forme en U, les branches dudit élément (18) de forme en U s'enclenchent avec lesdites saillies (16) du bac de la batterie, et des moyens (40) sont prévus et conçus pour relier la base (22) dudit élément (18) de forme en U au rebord adjacent (36) dudit plateau (28) de support et sont réglables pour enclencher rigidement ledit élément (18) de forme en U avec ledit bac (10) de la batterie et ledit plateau (28) de support.

2. Dispositif de montage de batterie selon la revendication 1, dans lequel les extrémités extérieures (20) des branches dudit élément (18) de forme en U sont recourbées de façon à réaliser un enclenchement ferme avec des ouvertures correspondantes situées dans le rebord adjacent (34) dudit plateau (28) de support.

3. Dispositif de montage de batterie selon la revendication 1 ou 2, dans laquel la base (22) dudit élément (18) de forme en U comprend une boucle (24) s'étendant vers l'extérieur, dans laquelle sont destinés à passer les moyens réglables (40) pour s'enclencher avec une ouverture alignable dans un ressaut (38) du rebord (36) dudit plateau de support (28) de manière que lesdits moyens réglables (40) puissent être actionnés pour réaliser ledit enclenchement rigide entre les branches dudit élément (18) de forme en U et lesdites saillies (16) du bac de la batterie.

4. Dispositif de montage de batterie selon la revendication 3, dans lequel lesdits moyens réglables (40) sont actionnés uniquement du côté de la base dudit élément (18) de forme en U afin de réaliser une inclinaison dudit élément (18) de forme en U vers sa base (22).

5. Dispositif de montage de batterie selon l'une quelconque des revendications précédentes, dans lequel lesdits moyens réglables (40) s'enclenchent avec la base (22) dudit élément (18) de forme en U et avec un ressaut (38) s'étendant vers l'extérieur du rebord adjacent (36) dudit bac (28) de support afin de réaliser un enclenchement rigide de maintien entre les branches dudit élément (18) de forme en U et lesdites saillies (16) du bac de la batterie.

6. Dispositif de montage de batterie selon l'une quelconque des revendications précédentes, dans lequel lesdits moyens réglables comprennent un élément à vis à tête auto-taraudeuse (40).

7. Dispositif de montage de batterie selon la revendication 3, dans lequel ladite boucle (24) est située centralement sur la base (22) de l'élément (18) de forme en U.

8. Dispositif de montage de batterie selon l'une quelconque des revendications précédentes, dans lequel ledit plateau (28) de support comprend des moyens épaulés horizontaux (30) sur lesquels le fond du bac (10) de batterie est destiné à reposer, lesdits moyens épaulés (30) étant l'élément de réaction lorsque l'élément (18) de forme en U réalise ledit enclenchement rigide.

9. Dispositif de montage de batterie selon la revendication 8, dans lequel ledit élément (18) de forme en U constitue, avec lesdits moyens épaulés (30) et lesdites saillies (16) du bac de batterie, la seule structure maintenant le bac (10) de la batterie enclenché rigidement avec ledit plateau (28) de support.

10. Dispositif de montage de batterie selon l'une quelconque des revendications précédentes, dans lequel ledit élément (18) de forme en U et lesdits rebords (34, 36) s'étendant vers le haut maintiennent le bac (10) de batterie en position dans le plateau (28) de support lorsque l'élément (18) de forme en U n'est pas dans l'état dudit enclenchement rigide, lesdits rebords (34, 36) étant dans une disposition étroitement rapprochée (35) desdits autres côtés opposés du bac (10) de la batterie.

Fig.1

Fig.2

# Fig. 3

# Fig.4

# Fig.5